# EUROPÄISCHE PATENTSCHRIFT

(11) **EP 3 268 210 B1**
(45) Veröffentlichungstag und Bekanntmachung des Hinweises auf die Patenterteilung: **18.07.2018**
(21) Anmeldenummer: 16704403.1
(22) Anmeldetag: 28.01.2016
(51) Int. Cl.: B29C 64/35, B29C 64/165, B08B 1/00, B29C 67/00, B33Y 99/00

(54) **3D-DRUCKER MIT BESCHICHTER UND BESCHICHTER-REINIGUNGSVORRICHTUNG UND VERFAHREN ZUM REINIGEN EINES BESCHICHTERS VON EINEM 3D-DRUCKER**
3D PRINTER HAVING A COATER AND COATER CLEANING DEVICE AND METHOD FOR CLEANING A COATER OF A 3D PRINTER
IMPRIMANTE 3D ÉQUIPÉE D'UN DISPOSITIF DE DÉPÔT ET D'UN DISPOSITIF DE NETTOYAGE DE DISPOSITIF DE DÉPÔT ET PROCÉDÉ DE NETTOYAGE D'UN DISPOSITIF DE DÉPÔT D'UNE IMPRIMANTE 3D

(30) Priorität: 13.03.2015 DE 102015103726
(43) Veröffentlichungstag der Anmeldung: 17.01.2018
(73) Patentinhaber: ExOne GmbH, 86368 Gersthofen (DE)
(72) Erfinder: HÖCHSMANN, Rainer, 86863 Langenneufnach (DE); MÜLLER, Alexander, 86420 Diedorf-Vogelsang (DE); KLAUA, Sven, 86161 Augsburg (DE)
(74) Vertreter: Viering, Jentschura & Partner mbB Patent- und Rechtsanwälte
(86) Internationale Anmeldenummer: PCT/EP2016/051831
(87) Internationale Veröffentlichungsnummer: WO 2016/146289

(56) Entgegenhaltungen:
- EP-A1- 2 724 844
- DE-A1-102009 056 687
- DE-A1-102012 022 859

## Beschreibung

Die vorliegende Erfindung betrifft einen 3D-Drucker mit einem Beschichter und einer Beschichter-Reinigungsvorrichtung sowie ein Verfahren zum Reinigen eines Beschichters von einem 3D-Drucker. Insbesondere betrifft die vorliegende Erfindung einen 3D-Drucker sowie ein Verfahren zum Reinigen eines Beschichters von einem 3D-Drucker gemäß dem Oberbegriff von Anspruch 1 bzw. dem Oberbegriff von Anspruch 10. Ein solcher 3D-Drucker bzw. ein solches Reinigungsverfahren ist zum Beispiel aus der DE 10 2012 022859 A1 bekannt.
Es sind verschiedene generative Fertigungsverfahren (und folglich verschiedene Arten von 3D-Druckern, also Maschinen/Anlagen zum schichtweisen Aufbau eines Bauteils) bekannt.
Einige generative Fertigungsverfahren haben die folgenden Schritte gemeinsam:
(1) Es wird zunächst Partikelmaterial vollflächig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich selektiv verfestigt, zum Beispiel durch selektives Aufdrucken von Behandlungsmittel, zum Beispiel Bindemittel, (alternativ zum Beispiel durch Lasersintern).
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht vollflächig aufgetragen wird (alternativ können zum Beispiel der Beschichter und die Druckvorrichtung jeweils um eine Schichtdicke angehoben werden).
(4) Schließlich kann das gefertigte Bauteil, das von losem, nicht-verfestigtem Partikelmaterial gestützt und umgeben ist, entpackt werden.
Der Bauraum, in dem das oder die Bauteile gefertigt werden, kann zum Beispiel von einer sogenannten Baubox (auch "Jobbox" genannt) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden. Ein Beispiel für eine solche Baubox ist zum Beispiel in DE 10 2009 056 696 A1 beschrieben.

In dem obigen Schritt (1) kommt in der Regel ein Beschichter (auch "Recoater" genannt) zum Einsatz. Es sind unterschiedliche Beschichter zur Verwendung in einem 3-Drucker bekannt, mit denen ein partikelförmiges Baumaterial in Form einer gleichmäßigen, vollflächigen Schicht auf das Baufeld (auch Baufläche oder Baubereich genannt) aufgebracht werden kann.

Eine Art von Beschichter verwendet eine Walze (kurz "Walzen-Beschichter"), vor der zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden. Beschichteranordnungen mit großen Längen (und folglich groß-dimensionierte 3D-Drucker) sind mit einem Walzen-Beschichter schlecht/schwierig darzustellen, unter anderem wegen einer möglichen Durchbiegung der Walze.

Eine andere Art von Beschichter (sog. "Behälter-Beschichter", zum Beispiel "Schlitz-Beschichter") verwendet einen Behälter, der einen inneren Hohlraum zur Aufnahme von partikelförmigem Baumaterial definiert, und hat einen langgestreckten Ausgabebereich (zum Beispiel aufweisend einen Ausgabeschlitz) zum Ausgeben des partikelförmigen Baumaterials. Der Behälter-Beschichter kann zum Beispiel über ein Baufeld hinweg verfahrbar sein (zum Beispiel horizontal, zum Beispiel quer zur Längsrichtung), so dass das partikelförmige Baumaterial durch den langgestreckten Ausgabebereich auf das Baufeld ausgebbar ist, um dadurch eine gleichmäßige, vollflächige Baumaterial-Schicht auf das Baufeld aufzubringen. Der Beschichter kann langgestreckt sein, um zum Beispiel die Länge oder Breite eines rechteckigen Baufelds zu überspannen bzw. abzudecken. Beschichteranordnungen mit großen Längen (und folglich groß-dimensionierte 3D-Drucker) können mit einem Behälter-Beschichter gut realisiert werden.

In dem obigen Schritt (2) kann zum Beispiel eine Druckvorrichtung mit einem Druckkopf zum Einsatz kommen, der auf einen Teilbereich der zuvor aufgebrachten Baumaterial-Schicht gesteuert ein Behandlungsmittel aufbringt. Das Behandlungsmittel trägt zu einer (unmittelbaren und/oder späteren) Verfestigung der Baumaterial-Schicht in dem Teilbereich bei. Zum Beispiel kann das Behandlungsmittel ein Bindemittel sein, zum Beispiel eine Bindemittel-Komponente eines Mehrkomponenten-Bindemittels.

Alternativ kann in dem obigen Schritt (2) zum Beispiel ein Laser eingesetzt werden, um einen Teilbereich der zuvor aufgebrachten Baumaterial-Schicht zu verfestigen, insbesondere durch Sintern oder Schmelzen des Baumaterials in dem Teilbereich.

Die vorliegende Erfindung betrifft einen 3D-Drucker mit einem Beschichter der oben beschriebenen, zweitgenannten Art, kurz einem "Behälter-Beschichter", insbesondere "Schlitz-Beschichter".

Ein solcher Beschichter kann zum Beispiel mit einem Streichelement versehen sein, von welchem auf das Baufeld aufgebrachtes Baumaterial überstrichen wird, um das Baumaterial zu verdichten und/oder zu nivellieren. Das Streichelement kann benachbart zu dem Ausgabeschlitz angeordnet sein und/oder diesen begrenzen, und kann zusammen mit dem Ausgabeschlitz den sogenannten Ausgabebereich des Beschichter-Behälters bilden.

Ein Beispiel für einen "Schlitz-Beschichter" ist aus der DE 10 2009 056 689 A1 bekannt. Siehe dort zum Beispiel die Figuren 17-20.

Es ist zudem bekannt, einen 3D-Drucker mit einer Beschichter-Reinigungsvorrichtung auszustatten, mit welcher an der Unterseite des Behälters anhaftendes Baumaterial entfernt bzw. abgewischt werden kann und/oder mit welcher der Längsschlitz des Behälters abgewischt werden kann, um ggf. Verstopfungen zu lösen. Siehe DE 10 2009 056 687 A1; dort zum Beispiel die Figuren 21, 24 und 25.

Die aus DE 10 2009 056 687 A1 bekannte Beschichter-Reinigungsvorrichtung weist ein langgetrecktes Wischelement auf, das unterhalb des Beschichter-Behälters zumindest teilweise in einem Baumaterial-Auffangbehälter aufgenommen ist. Das Wischelement ist drehbar abgestützt und mittels eines Wischelement-Antriebs drehbar antreibbar.

Es kann als eine Aufgabe der vorliegenden Erfindung angesehen werden, eine zu der oben genannten Beschichter-Reinigungsvorrichtung alternative und/oder verbesserte Beschichter-Reinigungsvorrichtung (bzw. einen entsprechenden 3D-Drucker) anzugeben, bzw. ein alternatives und/oder verbessertes Beschichter-Reinigungsverfahren anzugeben.

Hierzu stellt die vorliegende Erfindung einen 3D-Drucker gemäß Anspruch 1 sowie ein Verfahren gemäß Anspruch 10 bereit. Weitere Ausgestaltungen des erfindungsgemäßen 3D-Druckers und des erfindungsgemäßen Verfahrens sind in den abhängigen Ansprüchen beschrieben.

Gemäß verschiedenen Aspekten der vorliegenden Erfindung kann ein 3D-Drucker mit einem Beschichter und einer solchen Beschichter-Reinigungsvorrichtung bereitgestellt sein, mit welcher ein verbessertes/gutes Reinigungsergebnis erzielbar ist und/oder welche einfach und/oder kostengünstig zu realisieren ist, insbesondere auch für lange Beschichter und/oder groß-dimensionierte 3D-Drucker, und/oder welche den Beschichter zuverlässig, betriebssicher und effizient reinigt.

Gemäß verschiedenen Aspekten der vorliegenden Erfindung kann ein 3D-Drucker mit einem Beschichter und einer solchen Beschichter-Reinigungsvorrichtung bereitgestellt sein, mit welcher an dem Ausgabebereich des Behälters anhaftendes Baumaterial zuverlässig entfernt bzw. abgewischt werden kann und/oder mit welcher der Ausgabebereich des Behälters zuverlässig abgewischt werden kann, um ggf. Verstopfungen zu lösen.

Gemäß verschiedenen Aspekten der vorliegenden Erfindung ist ein 3D-Drucker mit einem Beschichter und einer Beschichter-Reinigungsvorrichtung bereitgestellt, wobei der Beschichter einen Behälter, der einen inneren Hohlraum zur Aufnahme von partikelförmigem Baumaterial definiert, und einen langgestreckten Ausgabebereich zum Ausgeben des partikelförmigen Baumaterials aufweist und in eine Reinigungsposition verfahrbar ist, in der er über der Beschichter-Reinigungsvorrichtung angeordnet ist, wobei die Beschichter-Reinigungsvorrichtung ein Wischelement und eine Antriebsvorrichtung zum Bewegen des Wischelements aufweist, und wobei die Antriebsvorrichtung eingerichtet ist, um das Wischelement für eine Reinigung des Ausgabebereichs entlang desselben zu bewegen, wenn sich der Beschichter über der Beschichter-Reinigungsvorrichtung befindet.

Der 3D-Drucker kann zum Beispiel eingerichtet sein, um das eingangs beschriebene generative Fertigungsverfahren auszuführen, zumindest die Schritte (1) bis (3).

Der 3D-Drucker kann zum Beispiel einen wie eingangs beschriebenen Bauraum aufweisen, in dem das oder die Bauteile gefertigt werden und der zum Beispiel von einer sogenannten Baubox (auch "Jobbox" genannt) definiert ist. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden.

Der 3D-Drucker kann zum Beispiel eine Druckvorrichtung mit einem Druckkopf aufweisen, der eingerichtet ist, um auf einen Teilbereich einer zuvor aufgebrachten Baumaterial-Schicht gesteuert ein Behandlungsmittel aufzubringen. Das Behandlungsmittel kann dabei zu einer (unmittelbaren und/oder späteren) Verfestigung der Baumaterial-Schicht in dem Teilbereich beitragen. Zum Beispiel kann das Behandlungsmittel ein Bindemittel sein, zum Beispiel eine Bindemittel-Komponente eines Mehrkomponenten-Bindemittels. Zusätzlich oder alternativ kann der 3D-Drucker zum Beispiel eine Laservorrichtung aufweisen, die eingerichtet ist, um einen Teilbereich einer zuvor aufgebrachten Baumaterial-Schicht zu verfestigen, insbesondere durch Sintern oder Schmelzen des Baumaterials in dem Teilbereich.

Der Beschichter (oder "Recoater") ist als sogenannter "Behälter-Beschichter" ausgebildet, zum Beispiel als "Schlitz-Beschichter" (d.h., mit einem Ausgabeschlitz). Der Behälter-Beschichter kann zum Beispiel über ein Baufeld hinweg verfahrbar sein (zum Beispiel horizontal, zum Beispiel quer zu seiner Längsrichtung), so dass das partikelförmige Baumaterial durch den langgestreckten Ausgabebereich auf das Baufeld ausgebbar ist, um dadurch eine gleichmäßige, vollflächige Baumaterial-Schicht auf das Baufeld aufzubringen. Der Beschichter kann langgestreckt sein, um zum Beispiel die Länge oder Breite eines rechteckigen Baufelds zu überspannen bzw. abzudecken.

Der Behälter kann zum Beispiel eine langgestreckte Form aufweisen, um zum Beispiel die gesamte Länge oder gesamte Breite eines rechteckigen Baufelds zu überspannen bzw. abzudecken. Der innere Hohlraum des Behälters kann zum Beispiel einen Schacht ausbilden, der im Querschnitt zum Beispiel (zumindest abschnittsweise) nach unten hin verjüngt ist und/oder eine Trichterform aufweist. Der innere Hohlraum zur Aufnahme von partikelförmigem Baumaterial kann zum Beispiel in dem langgestreckten Ausgabebereich, insbesondere dem unten beschriebenen (länglichen) Ausgabeschlitz, münden bzw. mit diesem in Verbindung stehen.

Der 3D-Drucker kann zum Beispiel eine stationäre Befüllungsstation aufweisen, in die der Beschichter verfahrbar ist, um den Behälter mit (frischem) Baumaterial zu befüllen.

Der Behälter kann zum Beispiel über einen mitfahrenden Vorlagebehälter mit Baumaterial versorgt werden.

In dem optionalen Vorlagebehälter und/oder dem Behälter kann zum Beispiel eine Verteilvorrichtung zum Verteilen des Baumaterials aufgenommen sein, zum Beispiel in Form einer Verteilerschnecke.

Gemäß verschiedenen Ausführungsformen kann der langgestreckte Ausgabebereich zum Beispiel einen (länglichen) Ausgabeschlitz und/oder ein oder mehrere (zum Beispiel ein oder zwei) langgestreckte Streichflächen aufweisen (zum Beispiel daraus bestehen), die eingerichtet sind, um aus dem Behälter ausgegebenes Baumaterial (zum Beispiel auf ein Baufeld während eines Normalbetriebs/Beschichtungsbetriebs aufgebrachtes Baumaterial) zu überstreichen, um dadurch das ausgegebene Baumaterial zu nivellieren und/oder zu verdichten. Die mindestens eine (effektive) Streichfläche kann zum Beispiel von einem Streichelement, welches zum Beispiel in Form einer sogenannten Streichleiste und/oder Streichklinge vorgesehen sein kann, bereitgestellt sein, zum Beispiel von einem nach unten ausgerichteten Abschnitt des Streichelements, der zum Beispiel nach unten hin vorspringen/vorstehen kann, zum Beispiel stufenförmig. Zum Beispiel kann die (jeweilige) Streichfläche planar und/oder streifenförmig ausgebildet sein. Die ein oder mehreren Streichflächen bzw.

Streichelemente können zum Beispiel benachbart zu dem Ausgabeschlitz angeordnet sein und/oder diesen begrenzen, zum Beispiel jeweils in Querrichtung. Zum Beispiel kann der Ausgabeschlitz in Querrichtung zwischen zwei Streichflächen bzw. Streichelementen angeordnet sein. Der Beschichter kann dadurch als bidirektionaler Beschichter ausgebildet bzw. betrieben werden, wobei jeweils die in Fahrtrichtung hinten liegende Streichfläche aktiv ist. Zum Beispiel kann dabei zumindest die jeweils aktive Streichfläche (zum Beispiel der gesamte Beschichter) gekippt werden, um einen sogenannten Anstellwinkel der Streichfläche bezüglich des Baufelds und dadurch einen Verdichtungsgrad des Partikelmaterials einzustellen. Die ein oder mehreren Streichelemente können zum Beispiel an einer Trägerstruktur des Beschichters befestigt und/oder an dieser aufgehängt sein, zum Beispiel gemeinsam mit einer optionalen Schließvorrichtung zum selektiven Schließen des Ausgabeschlitzes. Die besagte Trägerstruktur kann sich zum Beispiel quer zur Bewegungsrichtung des Beschichters und/oder in Längsrichtung des Beschichters erstrecken. An der Trägerstruktur kann auch der Behälter befestigt sein, zum Beispiel separat von dem optionalen mindestens einem Streichelement und/oder der optionalen Schließvorrichtung.

Zum Beispiel können der langgestreckte Ausgabebereich und/oder der (längliche) Ausgabeschlitz und/oder die ein oder mehreren langgestreckten Streichflächen nach unten ausgerichtet sein, zum Beispiel zu dem Baufeld hin. Der langgestreckte Ausgabebereich und/oder der (längliche) Ausgabeschlitz und/oder die ein oder mehreren langgestreckten (effektiven) Streichflächen können eine erste Erstreckung in Längsrichtung und eine zweite Erstreckung in Querrichtung haben, wobei die erste Erstreckung größer ist als die zweite Erstreckung, zum Beispiel mindestens um den Faktor 2, 3, 4, 5, 6, 7, 8, 9, 10, 11, 12, 13, 14, 15, 16, 17, 18, 19, 20 oder größer. Zum Beispiel können der langgestreckte Ausgabebereich und/oder der (längliche) Ausgabeschlitz und/oder die jeweilige Streichfläche in der Draufsicht im Wesentlichen eine rechteckige Form und/oder Streifenform aufweisen.

Die Reinigungsposition, in die der Beschichter verfahrbar ist, bzw. die Beschichter-Reinigungsvorrichtung können zum Beispiel benachbart zu dem Baufeld angeordnet sein.

Die Beschichter-Reinigungsvorrichtung kann zum Beispiel stationär, d.h. ortsfest, ausgebildet sein.

Das Wischelement der Beschichter-Reinigungsvorrichtung kann zum Beispiel eine Erstreckung in der oben genannten Längsrichtung haben, die kleiner ist als die erste Erstreckung des langgestreckten Ausgabebereiches und/oder des (länglichen) Ausgabeschlitzes und/oder der ein oder mehreren langgestreckten (effektiven) Streichflächen, zum Beispiel resultierend in einem Verhältnis (Wischelement-Erstreckung : erste Erstreckung) von kleiner gleich 1:2, kleiner gleich 1:3, kleiner gleich 1:4, kleiner gleich 1:5, kleiner gleich 1:6, kleiner gleich 1:7, kleiner gleich 1:8, kleiner gleich 1:9, kleiner gleich 1:10, kleiner gleich 1:11, kleiner gleich 1:12, kleiner gleich 1:13, kleiner gleich 1:14, kleiner gleich 1:15, kleiner gleich 1:16, kleiner gleich 1:17, kleiner gleich 1:18, kleiner gleich 1:19 oder kleiner gleich 1:20.

Das Wischelement der Beschichter-Reinigungsvorrichtung kann zum Beispiel eine Erstreckung in der oben genannten Querrichtung haben, die im Wesentlichen gleich oder größer als die zweite Erstreckung des langgestreckten Ausgabebereiches und/oder des (länglichen) Ausgabeschlitzes und/oder der ein oder mehreren langgestreckten (effektiven) Streichflächen ist.

Gemäß verschiedenen Ausführungsformen kann der Ausgabebereich (und/oder der (längliche) Ausgabeschlitz und/oder die ein oder mehreren langgestreckten (effektiven) Streichflächen) also zum Beispiel eine Quererstreckung haben, wobei das Wischelement den Ausgabebereich (und/oder den (längliche) Ausgabeschlitz und/oder die ein oder mehreren langgestreckten (effektiven) Streichflächen) in dessen Querrichtung überwiegend (d.h., einen Großteil davon) oder im Wesentlichen vollständig untergreift (wenn sich der Beschichter in seiner Reinigungsposition befindet).

Gemäß verschiedenen Ausführungsformen kann das Wischelement zum Beispiel als eine Bürste oder als ein Wischblatt bzw. eine Wischlippe (insbesondere als elastisches/elastische Wischblatt/Wischlippe) ausgebildet sein. Die Verwendung von ein oder mehreren Bürsten kann gemäß verschiedenen Aspekten der Erfindung eine zweckmäßige Abbildung der Kontur des Ausgabebereichs und insbesondere des Ausgabeschlitzes desselben erleichtern, wodurch sich ein besonders gutes Reinigungsergebnis erzielen lässt.

Gemäß verschiedenen Ausführungsformen kann die Beschichter-Reinigungsvorrichtung zum Beispiel eine Mehrzahl von Wischelementen aufweisen. Mehrere Wischelemente können zum Beispiel zu einer Gruppe von Wischelementen gruppiert sein, wobei die Wischelemente einer Gruppe benachbart zueinander und/oder angrenzend zueinander angeordnet sein. Dabei können mehrere Gruppen vorgesehen sein, die mit Abstand zueinander angeordnet sind.

Das Wischelement ist mittels der Antriebsvorrichtung für eine Reinigung des Ausgabebereichs entlang desselben bewegbar (d.h., im Wesentlichen in Längsrichtung desselben und/oder im Wesentlichen der Länge (des Ausgabereichs) nach hin, zum Beispiel im Wesentlichen der gesamten Länge oder einem Teilstück davon nach hin, welches Teilstück zum Beispiel größer gleich der Hälfte der gesamten Länge ist, zum Beispiel größer gleich 3/4 der gesamten Länge, zum Beispiel größer gleich 4/5 der gesamten Länge, zum Beispiel größer gleich 5/6 der gesamten Länge), wenn sich der Beschichter über der Beschichter-Reinigungsvorrichtung befindet. Hierdurch wird der Ausgabebereich von dem Wischelement in Längsrichtung abgewischt, anders als im eingangs genannten Stand der Technik, wo der Ausgabebereich von einem rotierenden Wischelement in Querrichtung abgewischt wird.

Die Antriebsvorrichtung kann zum Beispiel mit einer Steuerung/Steuereinheit in Verbindung stehen bzw. von dieser angesteuert werden und/oder einen Elektroantrieb aufweisen.

Wie beschrieben, ist die Antriebsvorrichtung eingerichtet, um das Wischelement entlang dem Ausgabebereich zu bewegen, d.h., im Wesentlichen in Längsrichtung desselben und/oder im Wesentlichen der Länge (des Ausgabereichs) nach hin, zum Beispiel im Wesentlichen der gesamten Länge oder einem wesentlichen/überwiegenden Teilstück davon nach hin.

Gemäß verschiedenen Ausführungsformen der vorliegenden Erfindung kann durch ein Abwischen des Ausgabebereichs (zum Beispiel des Ausgabeschlitzes und/oder der mindestens einen Streichfläche) in Längsrichtung ein effektives und/oder effizientes Reinigen desselben erreicht werden, zum Beispiel mit einer gegenüber der eingangs genannten, herkömmlichen Reinigungsvorrichtung verbesserten Reinigungswirkung und/oder mit einem gegenüber der eingangs genannten, herkömmlichen Reinigungsvorrichtung reduzierten Widerstand, der von dem Antrieb zu überwinden ist.

Gemäß verschiedenen Ausführungsformen der vorliegenden Erfindung kann durch ein Abwischen des Ausgabebereichs (zum Beispiel des Ausgabeschlitzes und/oder der mindestens einen Streichfläche) in Längsrichtung ein zweckmäßiges Reinigen desselben einfach und kostengünstig realisiert werden, zum Beispiel auch für lange Beschichter bzw. lange Ausgabebereiche. Insofern kann das für die herkömmliche Reinigungsvorrichtung benötigte, langgestreckte (zum Beispiel walzenförmige) Wischelement gemäß verschiedenen Aspekten der vorliegenden Erfindung eingespart werden bzw. die Länge des Wischelements kann reduziert werden, und der Antrieb des Wischelements kann schwächer ausgelegt werden, da der zu überwindende Widerstand reduziert werden kann.

Die Antriebsvorrichtung kann zum Beispiel eingerichtet sein, um das Wischelement entlang dem Ausgabebereich linear/geradlinig zu bewegen. Mit anderen Worten kann das Wischelement den Ausgabebereich in einer Linearbewegung entlang dessen Längsrichtung abfahren/abwischen, um denselben zu reinigen.

Das Wischelement kann gemäß verschiedenen Ausführungsformen zum Beispiel mittels einer Linearführung linear/geradlinig entlang dem Ausgabebereich bewegbar sein, zum Beispiel indem das Wischelement an einem Schlitten der Linearführung angebracht wird. Mit anderen Worten kann gemäß verschiedenen Ausführungsformen die Antriebsvorrichtung eine Linearführung aufweisen. Gemäß verschiedenen Ausführungsformen kann das Wischelement dabei zum Beispiel ausschließlich entlang dem Ausgabebereich bewegbar sein bzw. in Höhenrichtung fixiert sein.

Die Antriebsvorrichtung ist eingerichtet, um das Wischelement (zum Beispiel nach einer Reinigung des Beschichters) in eine abgesenkte Position (zum Beispiel "Parkposition" oder "Ruheposition") zu bewegen, um (zum Beispiel während eines Normalbetriebs des Beschichters) eine Kollision mit dem Beschichter zu vermeiden. Das Wischelement kann also zum Beispiel mittels der Antriebsvorrichtung zwischen einer abgesenkten Position und einer gegenüber der abgesenkten Position erhabenen Position (zum Beispiel "Reinigungsposition" zum Reinigen des Ausgabebereichs) hin und her bewegbar sein. Mit anderen Worten kann das Wischelement also auch in Höhenrichtung bewegbar ausgebildet sein, zumindest zwischen den zwei genannten Positionen in Höhenrichtung. Hierdurch kann eine besonders kompakte Ausgestaltung des 3D-Druckers ermöglicht werden, da die Beschichter-Reinigungsvorrichtung nahe an dem Baufeld angeordnet werden kann bzw. nahe an dieses herangerückt werden kann, ohne den Beschichter in seinem üblichen Betrieb (insb. während den Beschichtungs-Fahrten zwischen einer ersten und einer zweiten Reinigung) zu beeinträchtigen. Mit anderen Worten wird ermöglicht, dass der Beschichter ohne Kollision über die Reinigungsvorrichtung hinweg bewegt werden kann. Zudem ist es möglich, das Wischelement in der abgesenkten Position selbst zu reinigen, wodurch letztendlich eine noch bessere Reinigung des Beschichters erreicht werden kann.

Gemäß verschiedenen Ausführungsformen kann die Antriebsvorrichtung zum Beispiel eingerichtet sein, um das Wischelement entlang einer Umlaufbahn (zum Beispiel eine geschlossene Bahn/Bahnkurve, zum Beispiel aufweisend zwei gerade Abschnitte und zwei gekrümmte, z.B. halbkreisförmige, Abschnitte) zu bewegen, die sich mit einem ersten Bahnabschnitt entlang des Ausgabebereichs erstreckt (d.h., im Wesentlichen in Längsrichtung desselben und/oder im Wesentlichen der Länge (des Ausgabereichs) nach hin, zum Beispiel im Wesentlichen der gesamten Länge oder einem wesentlichen Teilstück davon nach hin), wenn sich der Beschichter in der Beschichter-Reinigungsposition befindet. Das Wischelement führt gemäß dieser Ausführungsform also keine Eigendrehbewegung um eine körpereigene Drehachse aus, sondern umläuft einen externen Punkt. Der erste Bahnabschnitt kann zum Beispiel geradlinig ausgebildet sein und/oder parallel zu dem Ausgabebereich bzw. an/in demselben verlaufen. Das Bewegen des Wischelements entlang einer Umlaufbahn stellt eine Möglichkeit dar, um das Wischelement zwischenzeitlich in die oben beschriebene abgesenkte Position zu bewegen. Dabei kann die Umlaufbahn zum Beispiel einen zweiten Bahnabschnitt aufweisen, der vertikal unter dem ersten Bahnabschnitt sowie vertikal unter dem Ausgabebereich angeordnet ist, wobei der zweite Bahnabschnitt zum Beispiel ebenfalls geradlinig ausgebildet sein kann und/oder parallel zu dem ersten Bahnabschnitt verlaufen kann. Wenn sich das Wischelement an dem zweiten Bahnabschnitt befindet, kann es zum Beispiel nach unten ausgerichtet sein, d.h. von dem Ausgabebereich abgewandt sein, wohingegen es nach oben ausgerichtet ist, wenn es sich an dem ersten Bahnabschnitt befindet.

Gemäß verschiedenen Ausführungsformen kann die Antriebsvorrichtung zum Beispiel eine langgestreckte Trägerstruktur (zum Beispiel flexible und/oder endlose Trägerstruktur) aufweisen, an der das Wischelement angebracht ist und die umlaufend (zum Beispiel entlang einer inneren Umlaufbahn) bewegbar ist, um dadurch das Wischelement entlang seiner Umlaufbahn zu bewegen. Die Antriebsvorrichtung kann also zum Beispiel eingerichtet sein, um die langgestreckte Trägerstruktur mittels eines Antriebsmittels entlang einer inneren Umlaufbahn zu bewegen. Die langgestreckte Trägerstruktur kann zum Beispiel in Form eines Bands und/oder Riemens bereitgestellt sein. Die Antriebsvorrichtung kann zum Beispiel ferner zwei oder mehrere Umlenkmittel aufweisen (zum Beispiel in Form von (Riemen-)Scheiben und/oder Rollen), um die herum die langgestreckte Trägerstruktur gewunden/gelegt/geführt ist, so dass durch Antreiben mindestens eines der Umlenkmittel (zum Beispiel mittels eines Elektromotors) die Trägerstruktur und somit das Wischblatt relativ zu dem Beschichter bewegbar ist. Zum Beispiel kann ein erster Abschnitt der inneren Umlaufbahn mit (geringem) Abstand zu dem Ausgabebereich im Wesentlichen in Längsrichtung desselben verlaufen und/oder vertikal unterhalb des Ausgabebereichs angeordnet sein und/oder geradlinig ausgebildet sein und/oder parallel zu dem Ausgabebereich verlaufen und/oder in Höhenrichtung zwischen dem Ausgabebereich und einem zweiten Abschnitt angeordnet sein, der zum Beispiel wiederum geradlinig ausgebildet sein kann und/oder parallel verlaufen kann zu dem Ausgabebereich und/oder dem ersten Bahnabschnitt.

Gemäß verschiedenen Ausführungsformen kann die Beschichter-Reinigungsvorrichtung zum Beispiel ferner einen Sensor (zum Beispiel Positionssensor) aufweisen, der eingerichtet ist, um eine Position des Wischelements zu detektieren. Hierzu kann zum Beispiel ein vom Sensor zu erfassendes Zielobjekt/Target an dem Wischelement selbst angebracht und/oder von diesem ausgebildet werden/sein und/oder an der obigen Trägerstruktur angebracht und/oder von dieser ausgebildet werden/sein. Der Sensor kann zum Beispiel mit einer Steuerung verbunden sein. Die Steuerung kann zum Beispiel eingerichtet sein, um gemäß einem von dem Sensor empfangenen Positionssignal die Antriebsvorrichtung (zum Beispiel einen E-Motor derselben) anzusteuern. Hierdurch kann zum Beispiel sichergestellt werden, dass eine Reinigung zuverlässig und wie gewünscht abläuft und/oder dass das Wischelement nach der Reinigung in der oben beschriebenen abgesenkten Position angeordnet ist/wird.

Bei der Verwendung von einer Mehrzahl von Wischelementen können diese zum Beispiel gemeinsam in eine jeweils abgesenkte Position bewegbar sein, um eine Kollision des Beschichters mit einem oder mehreren der Wischelemente zu vermeiden. Zum Beispiel können im Fall der oben beschriebenen Umlaufbahn, entlang der die Wischelemente bewegbar sind, die Wischelemente mit einem solchen Abstand zueinander bereitgestellt sein bzw. derart relativ zueinander angeordnet sein, dass sie allesamt bzw. gemeinsam an dem zweiten Bahnabschnitt angeordnet werden können bzw. zu diesem bewegbar sind und/oder dass der erste Bahnabschnitt frei gemacht werden kann von Wischelementen, zum Beispiel nach einer abgeschlossenen Reinigung.

Gemäß verschiedenen Ausführungsformen kann zum Beispiel eine Steuerung/Steuereinheit vorgesehen sein (zum Beispiel die oben genannte Steuerung, die mit dem Sensor verbunden ist), die eingerichtet ist, um die Antriebsvorrichtung (zum Beispiel einen E-Motor derselben) gemäß unterschiedlichen Wischelement-Bewegungsmustern zu steuern. Mit anderen Worten können in der Steuerung unterschiedliche Bewegungsmuster hinterlegt sein. Ein erstes Bewegungsmuster kann zum Beispiel eine dauerhafte Bewegung des Wischelements in einer Richtung aufweisen/enthalten (zum Beispiel entlang der obigen Umlaufbahn). Gemäß einem zweiten Bewegungsmuster kann das Wischelement zum Beispiel wechselweise/alternierend nach links und rechts bewegt werden. Ferner können sich zwei Bewegungsmuster zum Beispiel dadurch unterscheiden, dass das oder die Wischelemente mit unterschiedlichen Geschwindigkeiten bewegt werden. Durch das Vorsehen unterschiedlicher Bewegungsmuster ist es möglich, eine jeweils zweckmäßige Reinigung effizient auszuführen. Die Steuerung kann ein jeweiliges Bewegungsmuster zum Beispiel auswählen gemäß einem eingesetzten Baumaterial und/oder einem Grad der Verschmutzung und/oder Verstopfung des Ausgabebereichs (siehe unten) und/oder einem Reinigungsintervall (d.h., einem zeitlichen Abstand zwischen zwei aufeinanderfolgenden Reinigungen).

Gemäß verschiedenen Ausführungsformen kann der 3D-Drucker zum Beispiel einen Sensor ("Verschmutzungssensor") aufweisen, der eine Verschmutzung und/oder Verstopfung des Ausgabebereichs des Beschichters detektiert (zum Beispiel optisch), zum Beispiel einschließlich eines Grades der Verschmutzung und/oder Verstopfung. Die Steuerung kann in diesem Fall zum Beispiel eingerichtet sein, um gemäß dem Grad der Verschmutzung und/oder Verstopfung ein entsprechendes Bewegungsmuster auszuwählen und auszuführen.

Gemäß verschiedenen Ausführungsformen kann die Beschichter-Reinigungsvorrichtung zum Beispiel in einem Auffangbehälter (zum Beispiel einer Wanne) aufgenommen/angeordnet sein (zumindest abschnittsweise). Das Wischelement kann dabei zum Beispiel für eine Reinigung des Beschichters bzw. in seiner Reinigungsposition nach oben hin über den Behälterrand hinaus vorstehen. Bei der Reinigung anfallendes Partikelmaterial, zum Beispiel abgebürstetes Partikelmaterial, kann so in dem Behälter, zum Beispiel der Wanne, gesammelt werden. Ferner kann in dem Behälter/der Wanne eine Reinigung des Wischelements selbst erfolgen. Das gesammelte Partikelmaterial kann zum Beispiel recycelt werden.

Gemäß verschiedenen Aspekten der vorliegenden Erfindung kann ein 3D-Drucker einen Beschichter und eine Beschichter-Reinigungsvorrichtung aufweisen, wobei der Beschichter einen Behälter aufweist, der einen inneren Hohlraum zur Aufnahme von partikelförmigem Baumaterial definiert, einen Ausgabebereich zum Ausgeben des partikelförmigen Baumaterials hat und in eine Reinigungsposition verfahrbar ist, in der er über der Beschichter-Reinigungsvorrichtung angeordnet ist. Dabei kann die Beschichter-Reinigungsvorrichtung eine langgestreckte, umlaufend (zum Beispiel entlang einer inneren Umlaufbahn) bewegbare Trägerstruktur (zum Beispiel in Form eines Bands und/oder Riemens) und ein Wischelement aufweisen, das an der Trägerstruktur angebracht ist. Ferner kann die Beschichter-Reinigungsvorrichtung eingerichtet sein, um den Ausgabebereich des Beschichters zu reinigen, wenn sich der Beschichter in der Beschichter-Reinigungsvorrichtung befindet, indem die Trägerstruktur umlaufend bewegt wird, wodurch das an der Trägerstruktur angebrachte Wischelement den Ausgabebereich des Beschichters im Wesentlichen in Längsrichtung (zum Beispiel in Längsrichtung) abwischt, zum Beispiel entlang dessen gesamter Längserstreckung.

Das weiter oben Gesagte gilt analog auch für diesen 3D-Drucker. So sind zum Beispiel die in den Ansprüchen 2 bis 10 beschriebenen Ausgestaltungen analog auch auf diesen 3D-Drucker anwendbar.

Gemäß verschiedenen Aspekten der vorliegenden Erfindung kann ein Verfahren zum Reinigen eines Beschichters von einem 3D-Drucker bereitgestellt sein, wobei der Beschichter einen Behälter aufweist, der einen inneren Hohlraum zur Aufnahme von partikelförmigem Baumaterial definiert, und einen langgestreckten Ausgabebereich zum Ausgeben des partikelförmigen Baumaterials hat, und wobei das Verfahren aufweist:
Verfahren des Beschichters in eine Reinigungsposition, in der der Beschichter über einer Beschichter-Reinigungsvorrichtung angeordnet ist, die ein Wischelement und eine Antriebsvorrichtung zum Bewegen/Drehbewegen des Wischelements aufweist, und
Bewegen des Wischelements mittels der Antriebsvorrichtung im Wesentlichen in Längsrichtung (zum Beispiel in Längsrichtung) des Ausgabebereichs, um denselben abzuwischen und dadurch zu reinigen, wenn sich der Beschichter in der Beschichter-Reinigungsvorrichtung befindet.

Gemäß verschiedenen Ausführungsformen kann das Wischelement nach der Reinigung des Ausgabebereichs zum Beispiel in eine abgesenkte Position bewegt werden, um eine Kollision mit dem Beschichter zu vermieden. Zum Beispiel kann das Wischelement hierzu auf/entlang einer Umlaufbahn bewegt werden.

Gemäß verschiedenen Ausführungsformen kann das Bewegen des Wischelements zum Beispiel auf einer geschlossenen Bahnkurve erfolgen.

Im Übrigen gilt das oben für den bzw. die 3D-Drucker Gesagte analog für das Verfahren.

Des Weiteren gilt sowohl für das Verfahren als auch für den bzw. die 3D-Drucker das Folgende:
Unter partikelförmigem Baumaterial kann im Sinne dieser Anmeldung ein Baumaterial verstanden werden, welches zumindest einen Typ von Partikelmaterial (zum Beispiel Sand(körner), zum Beispiel Gießereisand, und/oder Metallpartikel und/oder Kunststoffpartikel) aufweist. Es kann auch unterschiedliches Partikelmaterial in dem Baumaterial enthalten sein, zum Beispiel ein Gemisch aus neuem Sand und recyceltem Sand oder ein Gemisch aus feinem Sand und grobem Sand oder ein Gemisch aus zwei unterschiedlichen Sandtypen. Das Baumaterial kann ferner zumindest eine flüssige Komponente aufweisen, zum Beispiel eine Bindemittel-Komponente, zum Beispiel einen Aktivator, und/oder einen oder mehrere feste und/oder flüssige Zuschlagstoffe. In dem Fall, dass das Baumaterial eine Bindemittel-Komponente enthält, kann zum Beispiel eine weitere Bindemittel-Komponente, zum Beispiel Furanharz, mittels einer Druckvorrichtung selektiv auf eine zuvor aufgebrachte Baumaterial-Schicht aufgedruckt werden, um diese in einem vorbestimmten Bereich zu verfestigen. Je nach herzustellendem Bauteil, zum Beispiel eine Gussform oder ein Gießkern, kann eine speziell dafür zubereitete Baumaterial-Zusammensetzung eingesetzt werden. Die Baumaterial-Zusammensetzung kann dabei definiert werden durch die Anzahl an eingesetzten Komponenten sowie die jeweilige Art und den jeweiligen Anteil der in dem Baumaterial(gemisch) enthaltenen Komponenten. Das Riesel- bzw. Fließverhalten des Baumaterials kann dabei je nach Baumaterial-Zusammensetzung stark variieren. Entsprechend können auch das zeitliche Auftreten und/oder das Ausmaß der Verschmutzung gemäß der eingesetzten Baumaterial-Zusammensetzung und somit eine erforderliche Reinigung variieren.

Gemäß verschiedenen Ausführungsformen kann der Beschichter zum Beispiel mit einer Vibrationsvorrichtung versehen sein, mit welcher das in dem inneren Hohlraum aufgenommene Partikelmaterial in Vibration versetzbar ist, um das Fließ- bzw. Rieselverhalten des partikelförmigen Baumaterials bzw. den Austrag des partikelförmigen Baumaterials aus dem Ausgabebereich zu beeinflussen, insbesondere zu fördern. Eine solche Vibrationsvorrichtung kann zum Beispiel von einer Rüttelvorrichtung gebildet sein, mit der zumindest ein Wandabschnitt des Behälters in Vibration versetzt bzw. mit einer Rüttelbewegung beaufschlagt werden kann, um den Austrag des partikelförmigen Baumaterials zu beeinflussen. Gemäß verschiedenen Ausführungsformen kann daher auch ein partikelförmiges Baumaterial, das ein schlechtes Riesel- bzw. Fließverhalten hat, unter Verwendung einer Vibrationsvorrichtung in eine zweckmäßige Vibration versetzt werden, und/oder kann ein Wandabschnitt eines das Baumaterial aufnehmenden Behälters unter Verwendung einer Rüttelvorrichtung mit einer zweckmäßigen Rüttelbewegung beaufschlagt werden.

Gemäß verschiedenen Ausführungsformen kann der Beschichter zum Beispiel mit einer Labyrinth-Struktur im Innern des Behälters versehen sein, welche ein Ausfließen/Austreten des Baumaterials im Stillstand des Beschichters verhindern kann, und/oder mit einer Schließvorrichtung, die ein selektives Verschießen des Ausgabebereichs (zum Beispiel des Ausgabeschlitzes) ermöglicht und zum Beispiel ein an dem Beschichter angebrachtes Schließelement aufweist.

Beispielgebende, aber nicht einschränkende Ausführungsformen der vorliegenden Erfindung sind in den Figuren dargestellt und werden im Folgenden näher erläutert.

Es zeigen:
Figur 1 eine Seitenansicht eines Beschichters und einer Beschichter-Reinigungsvorrichtung von einem 3D-Drucker gemäß einer ersten Ausführungsform der vorliegenden Erfindung.
Figur 2 eine Querschnittansicht des Beschichters und der Beschichter-Reinigungsvorrichtung aus Figur 1.
Figur 3 eine Seitenansicht eines Beschichters und einer Beschichter-Reinigungsvorrichtung von einem 3D-Drucker gemäß einer zweiten Ausführungsform der vorliegenden Erfindung.
Figur 4 eine Querschnittansicht des Beschichters und der Beschichter-Reinigungsvorrichtung aus Figur 3.

In der folgenden ausführlichen Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

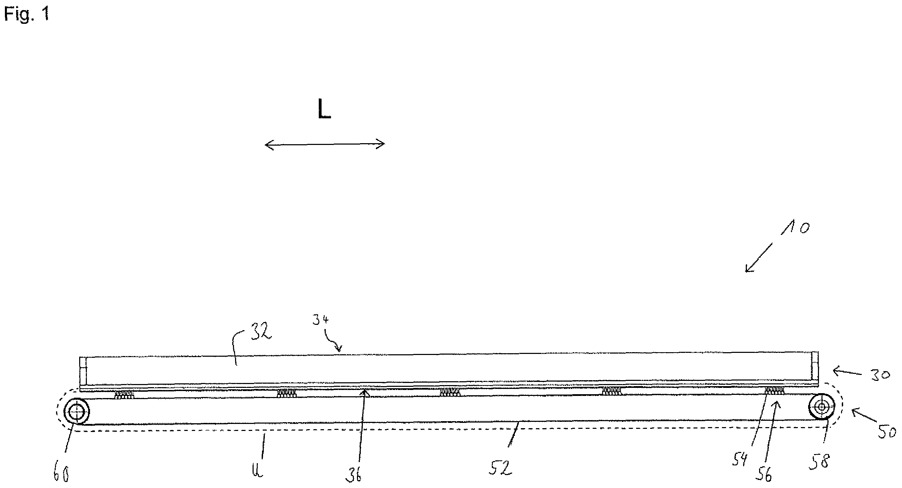

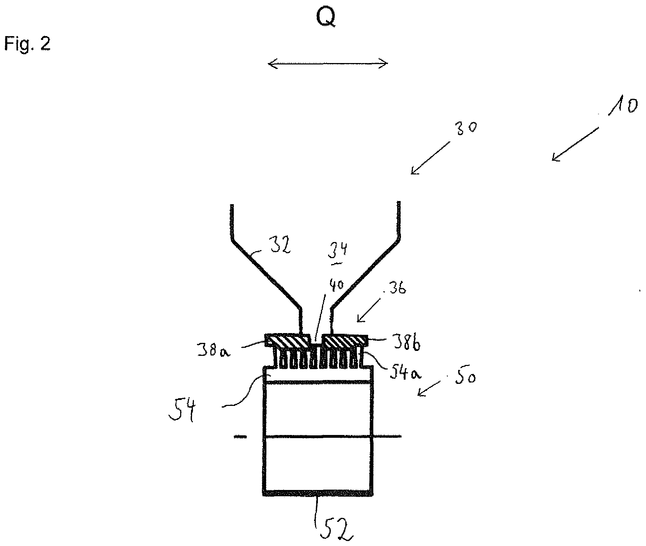

Die **Figuren 1** **und** **2** zeigen eine schematische, vereinfacht dargestellte Seitenansicht bzw. eine Querschnittansicht eines Beschichters 30, der für eine Reinigung seines Ausgabebereichs 36 in eine Reinigungsposition verfahren ist, in welcher er vertikal über einer Beschichter-Reinigungsvorrichtung 50 angeordnet ist. Die Reinigungsposition kann sich zum Beispiel nahe einem nicht gezeigten Baufeld eines zugehörigen 3D-Druckers 10 befinden.

Wie gezeigt, weist der Beschichter 30 einen Behälter 32 auf, der einen inneren Hohlraum 34 zur Aufnahme von partikelförmigem Baumaterial definiert. Ferner hat der Beschichter 30 einen langgestreckten Ausgabebereich 36 zum Ausgeben des partikelförmigen Baumaterials auf ein Baufeld hin.

Die Beschichter-Reinigungsvorrichtung 50 weist mindestens ein Wischelement 54 und eine Antriebsvorrichtung zum Bewegen des Wischelements auf.

Hier ist beispielgebend eine Mehrzahl von Wischelementen 54 gezeigt, wobei beispielgebend jeweils sechs Wischelemente 54 in einer Gruppe 56 angeordnet sind, und wobei insgesamt fünf Gruppen 56 von Wischelementen vorgesehen sind.

Sämtliche Wischelemente 54 sind hier beispielgebend als Bürste ausgebildet; siehe insbesondere Figur 2, welche den Bürstenbesatz 54a, zum Beispiel in Form von Borsten, zeigt. Wie aus Figur 1 ersichtlich, sind die Wischelemente 54 derart verteilt, dass sie mittels der Antriebsvorrichtung gemeinsam in eine jeweils abgesenkte Position bewegbar sind, um eine Kollision mit dem Beschichter 30 zu vermeiden. In Figur 1 sind dabei sämtliche Wischelemente 54 in ihrer jeweils erhabenen Position gezeigt, jedoch sollte verständlich sein, dass die Wischelemente 54 demnach auch gemeinsam in eine abgesenkte Position bewegbar sind.

Die Antriebsvorrichtung ist eingerichtet, um die Wischelemente 54 für eine Reinigung des Ausgabebereichs 36 entlang desselben zu bewegen, wenn sich der Beschichter 30 in der Beschichter-Reinigungsposition befindet.

Wie in Figur 1 gezeigt, haben der Beschichter 30 und der Behälter 32 jeweils eine langgestreckte Form, d.h. eine Erstreckung in Längsrichtung L, die größer ist als eine Erstreckung in Querrichtung Q. Gleiches gilt für den Ausgabebereich 36, der ebenfalls eine Erstreckung in Längsrichtung L hat, die größer ist als seine Erstreckung in Querrichtung Q. Zum Beispiel kann sich der Ausgabebereich 36 in Figur 1 im Wesentlichen über die gesamte Länge des Behälters 32 hinweg erstrecken.

Wie in Figur 2 gezeigt, kann der Ausgabebereich 36 einen langgestreckten Ausgabeschlitz 40 und/oder mindestens eine langgestreckte Streichfläche aufweisen, die eingerichtet ist, um aus dem Behälter 32 auf ein Baufeld ausgegebenes Baumaterial zu überstreichen, um dadurch das ausgegebene Baumaterial zu nivellieren und/oder zu verdichten. Hier ist der Beschichter 30 beispielgebend als ein bidirektionaler Beschichter ausgebildet, der in beiden Richtungen (d.h. während einer Fahrt nach links und rechts bzw. während einer Hin- und einer Rückfahrt über das Baufeld) eine Schicht auf ein Baufeld aufbringen kann, wozu der Beschichter mit zwei langgestreckten Streichflächen ausgestattet ist, die hier von zwei leistenförmigen Streichelementen 38a und 38b bzw. deren jeweiliger Unterseite gebildet werden/sind. Die beiden Streichelemente 38a, 38b sind in Querrichtung des Beschichters (in welcher Richtung der Beschichter horizontal über ein Baufeld hinweg verfahrbar ist) auf gegenüberliegenden Seiten des Ausgabeschlitzes 40 angeordnet und begrenzen diesen in Querrichtung. Es versteht sich, dass der Beschichter auch als unidirektionaler Beschichter ausgebildet sein kann, mit lediglich einer Streichfläche bzw. einem Streichelement. Auch ist es denkbar, den Beschichter ohne Streichfläche/Streichelement zu realisieren.

Wie ferner aus Figur 2 ersichtlich, untergreift das (jeweilige) Wischelement 54 den Ausgabebereich 36 in dessen Querrichtung hier beispielgebend vollständig, also sowohl den Ausgabeschlitz 40 als auch die beiden (effektiven) Streichflächen, die von der dem Baufeld zugewandten Unterseite des nach unten vorspringenden Abschnitts des jeweiligen Streichelements 38a, 38b gebildet sind/werden.

Dadurch, dass die Antriebsvorrichtung eingerichtet ist, um die Wischelemente 54 für eine Reinigung des Ausgabebereichs 36 entlang desselben zu bewegen, wenn sich der Beschichter 30 in der Beschichter-Reinigungsposition befindet, also durch das Abwischen im Wesentlichen in Längsrichtung des Ausgabebereichs, kann der langgestreckte Ausgabebereich 36 effektiv und effizient gereinigt werden, zum Beispiel verglichen mit einem Abwischen des Ausgabebereichs in Querrichtung desselben, wie aus dem Stand der Technik bekannt.

Wie in Figur 1 gezeigt, kann die Antriebsvorrichtung eingerichtet sein, um das jeweilige Wischelement 54 entlang einer Umlaufbahn U (gestrichelte Linie in Figur 1) zu bewegen, die sich mit einem ersten Bahnabschnitt entlang des Ausgabebereichs 36 erstreckt, wenn sich der Beschichter 30 in der Beschichter-Reinigungsposition befindet. Der erste Bahnabschnitt ist hier linear ausgebildet und verläuft an/in dem Ausgabebereich 36. Ein zweiter, hier ebenfalls linear ausgebildeter Bahnabschnitt verläuft unterhalb des ersten Bahnabschnitts.

Dabei kann die Antriebsvorrichtung zum Beispiel eine langgestreckte Trägerstruktur 52, hier in Form eines Endlosriemens oder Endlosbands, aufweisen, an der das jeweilige Wischelement 54 angebracht ist und die umlaufend bewegbar ist (zum Beispiel mittels eines E-Motors), um dadurch das Wischelement entlang seiner Umlaufbahn zu bewegen.

Wie in Figur 1 gezeigt, kann die Antriebsvorrichtung zum Beispiel ferner eine erste und eine zweite Scheibe 58, 60 aufweisen, von denen eine antreibbar ist, zum Beispiel mittels eines (nicht gezeigten) E-Motors, um den Endlosriemen / das Endlosband und dadurch wiederum das jeweilige Wischelement 54 zu bewegen.

Die Figuren 1 und 2 zeigen einen Zustand, in dem sich die Bürsten in einer erhabenen Position befinden und nach oben orientiert sind, um den Ausgabebereich zu reinigen. Im normalen Betrieb des 3D-Druckers 10 können alle Bürsten in eine abgesenkte Position bewegt und nach unten orientiert sein, so dass der Beschichter/Recoater 30 ohne Kollision über die Reinigungsposition bewegt werden kann. Soll der Beschichter 30 bzw. dessen Ausgabebereich 36 gereinigt werden, so kann er in eine Position über der Reinigungsvorrichtung 50 bewegt und angehalten werden. Danach kann der Bürstenantrieb angeschaltet werden bzw. eine der beiden Scheiben 58, 60 gedreht werden (zum Beispiel durch eine nicht-gezeigte Steuerung), so dass sich die Bürsten aus ihrer abgesenkten Position nach oben bewegen. Durch ein zweckmäßiges Bewegungsmuster der Bürsten bzw. des Endlosriemens / Bandes kann eine gewünschte Reinigungswirkung erzielt werden. Zum Beispiel kann der Endlosriemen / das Band dauerhaft in eine Richtung bewegt werden, oder der Endlosriemen / das Band kann wechselweise nach links und rechts bewegt werden. Nachdem der Ausgabebereich ausreichend gereinigt wurde, können die Bürsten wieder nach unten bewegt werden, so dass der Beschichter/Recoater 30 ohne Kollision über die Reinigungsposition bewegt werden kann.

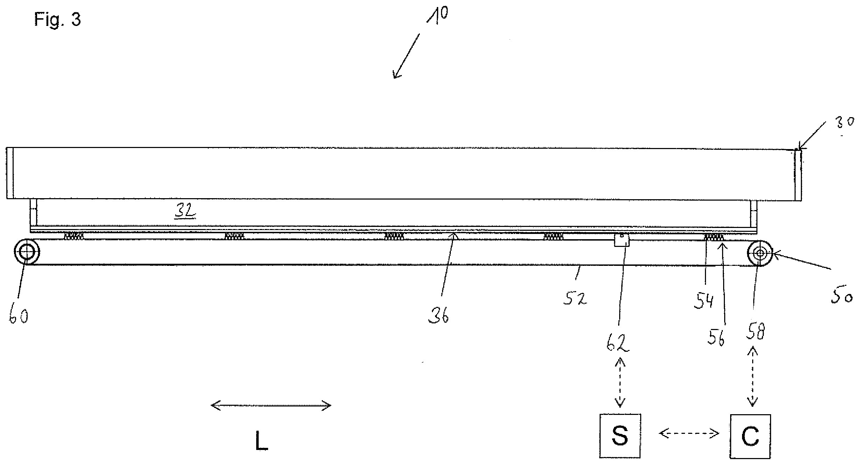

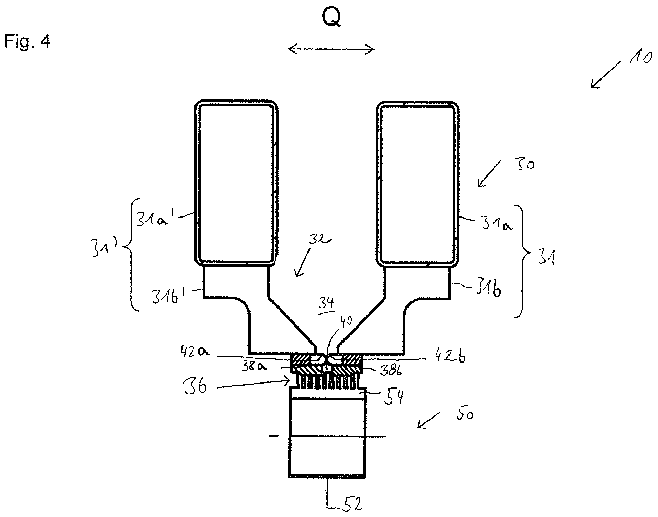

Im Folgenden wird mit Bezug auf die **Figuren 3** **und** **4** ein 3D-Drucker gemäß einer weiteren Ausführungsform der Erfindung beschrieben, wobei auf eine wiederholte Beschreibung von Merkmalen, die der 3D-Drucker mit dem aus den Figuren 1 und 2 gemeinsam hat, weitestgehend verzichtet wird.

Ein Unterschied des 3D-Druckers 10 aus den Figuren 3 und 4 gegenüber dem aus den Figuren 1 und 2 ist darin zu sehen, dass der 3D-Drucker 10 bzw. die Reinigungsvorrichtung 50 gemäß dieser Ausführungsform einen Sensor S aufweist, der eingerichtet ist, um eine Umlaufposition des Trägerelements 52 und somit eine Position des jeweiligen Wischelements 54 zu detektieren. Hierzu kann, wie in Figur 3 gezeigt, zum Beispiel ein Sensor-Target 62 an dem Trägerelement 52 angebracht sein. Alternativ oder zusätzlich können zum Beispiel ein oder mehrere der Wischelemente 54 selbst ein Sensor-Target 62 aufweisen.

Wie ferner aus Figur 3 ersichtlich, kann der 3D-Drucker 10 zum Beispiel eine Steuerung C aufweisen, die mit der Antriebsvorrichtung in Verbindung steht, zum Beispiel mit einem (nicht-gezeigten) E-Motor, der die Scheibe 58 antreibt. Die Steuerung C kann ein oder mehrere Bewegungsmuster für die Reinigung des Ausgabebereichs 36 enthalten. Der Sensor und die Steuerung können zum Beispiel miteinander in Verbindung stehen, so dass die von dem Sensor erfasste Position an die Steuerung übermittelt werden kann.
Ansonsten ist die Beschichter-Reinigungsvorrichtung 50 aus den Figuren 3 und 4 derjenigen aus den Figuren 1 und 2 gleich.
Der Beschichter 30 kann gemäß dieser Ausführungsform zum Beispiel in Form einer Beschichteranordnung ausgebildet sein, wie sie in einem der folgenden Dokumente beschrieben ist: DE 10 2014 112 454, DE 10 2014 112 450, DE 10 2014 112 469. Der Offenbarungsgehalt dieser Dokumente wird insofern hierin mitaufgenommen als dass der Beschichter bzw. die Beschichteranordnung betroffen ist.
Alternativ kann der Beschichter zum Beispiel wie in einem der folgenden Dokumente beschrieben aufgebaut sein: WO 2011/067303 A2 und DE 10 2009 056 687 A1. Auch der Offenbarungsgehalt dieser Dokumente wird insofern aufgenommen als dass der Beschichter betroffen ist.
Wie in Figur 4 gezeigt, kann der Behälter 32 hier beispielgebend zwischen einer linken Trägerstruktur 31' und einer rechten Trägerstruktur 31 angeordnet/ausgebildet sein, wobei sich die jeweilige Trägerstruktur aus einer oberen Trägerstruktur 31a bzw. 31a' und einer unteren Trägerstruktur 31b bzw. 31b' zusammensetzen kann. Dabei kann eine hier nicht näher gezeigte Wandung des Behälters 32 zum Beispiel an der rechten und/oder der linken oberen Trägerstruktur 31a, 31a' angebracht sein, um sich nach unten hin zu erstrecken.
Über dem Behälter 32 kann hierbei ein sogenannter Vorlagebehälter ausgebildet sein, zum Beispiel von bzw. zwischen der linken und rechten oberen Trägerstruktur 31a bzw. 31a' und/oder einer daran befestigten Wandstruktur.
Wie ferner aus Figur 4 ersichtlich, können zum Beispiel an der linken und/oder der rechten unteren Trägerstruktur 31b, 31b' jeweils ein Schließelement 42a bzw. 42b und/oder eine Abstreifklinge 38a bzw. 38b befestigt sein. Von Letzterer wird an ihrer Unterseite eine langgestreckte Streichfläche ausgebildet, die eingerichtet ist, um aus dem Behälter ausgegebenes Baumaterial zu überstreichen, um dadurch das ausgegebene Baumaterial zu nivellieren und/oder zu verdichten. Das Schließelement 42a bzw. 42b kann zum Beispiel einen dem Ausgabeschlitz 40 zugewandten, mittels Druckluft verformbaren Abschnitt aufweisen, wobei in Figur 4 ein geschlossener Zustand gezeigt ist, in dem der jeweilige verformbare Abschnitt nach Innen bewegt ist, um den Ausgabeschlitz 40 zu verschließen, zum Beispiel für eine Reinigung des Ausgabebereichs 36.

Die vorhergehende Beschreibung von spezifischen beispielgebenden Ausführungsformen der vorliegenden Erfindung wurde präsentiert zum Zwecke der Illustration und Beschreibung. Sie soll nicht erschöpfend sein oder die Erfindung auf die offenbarten präzisen Formen beschränken, und selbstverständlich sind viele Modifikationen und Variationen im Lichte der obigen Lehre möglich. Die beispielgebenden Ausführungsformen wurden ausgewählt und beschrieben, um bestimmte Prinzipien der Erfindung und ihre praktische Anwendung zu erläutern, um hierdurch Fachleuten zu ermöglichen, verschiedene beispielgebende Ausführungsformen der vorliegenden Erfindung sowie verschiedene Alternativen und Modifikationen davon herzustellen und anzuwenden. Es ist beabsichtigt, dass der Umfang der Erfindung durch die hieran angehängten Ansprüche und ihre Äquivalente definiert wird.

## Patentansprüche

1. 3D-Drucker (10) mit einem Beschichter (30) und einer Beschichter-Reinigungsvorrichtung (50),
wobei der Beschichter (30) einen Behälter (32), der einen inneren Hohlraum (34) zur Aufnahme von partikelförmigem Baumaterial definiert, und einen langgestreckten Ausgabebereich (36) zum Ausgeben des partikelförmigen Baumaterials aufweist und in eine Reinigungsposition verfahrbar ist, in der er über der Beschichter-Reinigungsvorrichtung (50) angeordnet ist,
wobei die Beschichter-Reinigungsvorrichtung (50) ein Wischelement (54) und eine Antriebsvorrichtung zum Bewegen des Wischelements aufweist,
und wobei die Antriebsvorrichtung eingerichtet ist, um das Wischelement (54) für eine Reinigung des Ausgabebereichs (36) entlang desselben zu bewegen, wenn sich der Beschichter (30) über der Beschichter-Reinigungsvorrichtung (50) befindet,
**dadurch gekennzeichnet, dass**
die Antriebsvorrichtung eingerichtet ist, um das Wischelement (54) in eine abgesenkte Position zu bewegen, um eine Kollision mit dem Beschichter (30) zu vermeiden.

2. 3D-Drucker (10) nach Anspruch 1, wobei die Antriebsvorrichtung eingerichtet ist, um das Wischelement (54) entlang einer Umlaufbahn (U) zu bewegen, die sich mit einem ersten Bahnabschnitt entlang des Ausgabebereichs (36) erstreckt, wenn sich der Beschichter (30) in der Beschichter-Reinigungsposition befindet.

3. 3D-Drucker (10) nach Anspruch 2, wobei die Antriebsvorrichtung eine langgestreckte Trägerstruktur (52) aufweist, an der das Wischelement (54) angebracht ist und die umlaufend bewegbar ist, um dadurch das Wischelement entlang seiner Umlaufbahn zu bewegen.

4. 3D-Drucker (10) nach einem der vorangehenden Ansprüche, wobei der Ausgabebereich (36) eine Quererstreckung hat, und wobei das Wischelement (54) den Ausgabebereich in dessen Querrichtung überwiegend oder im Wesentlichen vollständig untergreift.

5. 3D-Drucker (10) nach einem der vorangehenden Ansprüche, wobei das Wischelement (54) als Bürste ausgebildet ist.

6. 3D-Drucker (10) nach einem der vorangehenden Ansprüche, wobei der Ausgabebereich (36) einen langgestreckten Ausgabeschlitz (40) und/oder mindestens eine langgestreckte Streichfläche aufweist, die eingerichtet ist, um aus dem Behälter (32) ausgegebenes Baumaterial zu überstreichen, um dadurch das ausgegebene Baumaterial zu nivellieren und/oder zu verdichten.

7. 3D-Drucker (10) nach einem der vorangehenden Ansprüche, ferner aufweisend einen Sensor (S), der eingerichtet ist, um eine Position des Wischelements (54) zu detektieren.

8. 3D-Drucker (10) nach einem der vorangehenden Ansprüche, wobei die Beschichter-Reinigungsvorrichtung (50) eine Mehrzahl von Wischelementen (54) aufweist.

9. 3D-Drucker (10) nach Anspruch 8, wobei die Wischelemente (54) gemeinsam in eine jeweils abgesenkte Position bewegbar sind, um eine Kollision mit dem Beschichter (30) zu vermieden.

10. Verfahren zum Reinigen eines Beschichters (30) von einem 3D-Drucker (10), wobei der Beschichter (30) einen Behälter (32) aufweist, der einen inneren Hohlraum (34) zur Aufnahme von partikelförmigem Baumaterial definiert, und einen langgestreckten Ausgabebereich (36) zum Ausgeben des partikelförmigen Baumaterials hat, aufweisend:
Verfahren des Beschichters (30) in eine Reinigungsposition, in der der Beschichter über einer Beschichter-Reinigungsvorrichtung (50) angeordnet ist, die ein Wischelement (54) und eine Antriebsvorrichtung zum Bewegen des Wischelements aufweist, und
Bewegen des Wischelements (54) mittels der Antriebsvorrichtung im Wesentlichen in Längsrichtung des Ausgabebereichs (36), um denselben abzuwischen und dadurch zu reinigen, wenn sich der Beschichter in der Beschichter-Reinigungsvorrichtung befindet,
**dadurch gekennzeichnet, dass**
das Wischelement (54) nach der Reinigung des Ausgabebereichs in eine abgesenkte Position bewegt wird, um eine Kollision mit dem Beschichter (30) zu vermeiden.

11. Verfahren nach Anspruch 10, wobei das Bewegen des Wischelements auf einer geschlossenen Bahnkurve erfolgt.

## Claims

1. 3D printer (10) having a coating device (30) and a coating device cleaning device (50),
wherein the coating device (30) comprises a container (32) which defines an inner cavity (34) for receiving particulate construction material, and an elongate output region (36) for outputting the particulate construction material, and is movable into a cleaning position in which it is arranged above the coating device cleaning device (50),
the coating device cleaning device (50) comprising a wiping member (54) and a driving device for moving the wiping member,
and wherein the driving device is configured to move the wiping member (54) along the output region (36) for cleaning the same when the coating device (30) is located above the coating device cleaning device (50),
**characterized in that**
the driving device is configured to move the wiping member (54) into a lowered position, in order to avoid a collision with the coating device (30).

2. 3D printer (10) according to claim 1, wherein the driving device is configured to move the wiping member (54) along a circulating path (U) extending with a first path section along the output region (36) when the coating device (30) is in the coating device cleaning position.

3. 3D printer (10) according to claim 2, wherein the driving device comprises an elongate carrier structure (52) to which the wiping member (54) is attached and which is movable in a circulating manner, to thereby move the wiping member along its circulating path.

4. 3D printer (10) according to any one of the preceding claims, wherein the output region (36) has a transverse extension and wherein the wiping member (54) predominantly or substantially completely underlaps the output region in the transverse direction thereof.

5. 3D printer (10) according to any one of the preceding claims, wherein the wiping member (54) is configured as a brush.

6. 3D printer (10) according to any one of the preceding claims, wherein the output region (36) comprises an elongate output slot (40) and/or at least one elongate stroking surface which is configured to stroke construction material output from the container (32), to thereby level and/or compress the output construction material.

7. 3D printer (10) according to any one of the preceding claims, further comprising a sensor (S) which is configured to detect a position of the wiping member (54).

8. 3D printer (10) according to any one of the preceding claims, the coating device cleaning device (50) comprising a plurality of wiping members (54).

9. 3D printer (10) according to claim 8, wherein the wiping members (54) are movable together into a respectively lowered position, to avoid a collision with the coating device (30).

10. Method for cleaning a coating device (30) of a 3D printer (10), wherein the coating device (30) comprises a container (32) which defines an inner cavity (34) for receiving particulate construction material and has an elongate output region (36) for outputting the particulate construction material, comprising:
moving the coating device (30) into a cleaning position in which the coating device is arranged above a coating device cleaning device (50) comprising a wiping member (54) and a driving device for moving the wiping member, and
moving the wiping member (54) by means of the driving device substantially in a longitudinal direction of the output region (36), to wipe off and thereby clean the same when the coating device is in the coating device cleaning device,
**characterized in that**
the wiping member (54) is moved into a lowered position after cleaning the output region, to avoid a collision with the coating device (30).

11. Method according to claim 10, wherein moving the wiping member takes place on a closed trajectory.

## Revendications

1. Imprimante 3D (10) avec une coucheuse (30) et un dispositif de nettoyage de coucheuse (50),
la coucheuse (30) comprenant un récipient (32), qui définit un espace vide interne (34) pour le logement d'un matériau de construction particulaire et une zone de distribution (36) pour la distribution du matériau de construction particulaire et qui est mobile vers une position de nettoyage dans laquelle il est disposé au-dessus du dispositif de nettoyage de coucheuse (50),
le dispositif de nettoyage de coucheuse (50) comprenant un élément d'essuyage (54) et un dispositif d'entraînement pour le déplacement de l'élément d'essuyage,
et le dispositif d'entraînement étant conçu pour déplacer l'élément d'essuyage (54) pour un nettoyage de la zone de distribution (36) le long de celle-ci lorsque la coucheuse (30) se trouve au-dessus du dispositif de nettoyage de coucheuse (50),
**caractérisée en ce que**
le dispositif d'entraînement est conçu pour déplacer l'élément d'essuyage (54) vers une position abaissée afin d'éviter une collision avec la coucheuse (30).

2. Imprimante 3D (10) selon la revendication 1, le dispositif d'entraînement étant conçu pour déplacer l'élément d'essuyage (54) le long d'une trajectoire circulaire (U) qui s'étend avec une première portion de trajectoire le long de la zone de distribution (36), lorsque la coucheuse (30) se trouve dans la position de nettoyage de la coucheuse.

3. Imprimante 3D (10) selon la revendication 2, le dispositif d'entraînement comprenant une structure porteuse allongée (52) sur laquelle l'élément d'essuyage (54) est monté et est mobile de manière circulaire, afin de déplacer l'élément d'essuyage le long de sa trajectoire circulaire.

4. Imprimante 3D (10) selon l'une des revendications précédentes, la zone de distribution (36) présentant une extension transversale et l'élément d'essuyage (54) prenant la zone de distribution principalement ou globalement entièrement par le dessous dans sa direction transversale.

5. Imprimante 3D (10) selon l'une des revendications précédentes, l'élément d'essuyage (54) étant conçu comme une brosse.

6. Imprimante 3D (10) selon l'une des revendications précédentes, la zone de distribution (36) comprenant une fente de distribution allongée (40) et/ou au moins une surface d'étalement allongée qui est conçue pour étaler le matériau de construction distribué à partir du récipient (32) afin de niveler et/ou de compacter le matériau de construction distribué.

7. Imprimante 3D (10) selon l'une des revendications précédentes, comprenant en outre un capteur (S) qui est conçu pour détecter une position de l'élément d'essuyage (54).

8. Imprimante 3D (10) selon l'une des revendications précédentes, le dispositif de nettoyage de coucheuse (50) comprenant une pluralité d'éléments d'essuyage (54).

9. Imprimante 3D (10) selon la revendication 8, les éléments d'essuyage (54) étant mobiles ensemble vers une position abaissée afin d'éviter une collision avec la coucheuse (30).

10. Procédé de nettoyage d'une coucheuse (30) d'une imprimante 3D (10), la coucheuse (30) comprenant un récipient (32), qui définit un espace vide interne (34) pour le logement d'un matériau de construction particulaire, et une zone de distribution allongée (36) pour la distribution du matériau de construction particulaire, comprenant :
le déplacement de la coucheuse (30) vers une position de nettoyage dans laquelle la coucheuse est disposée au-dessus d'un dispositif de nettoyage de coucheuse (50), qui comprend un élément d'essuyage (54) et un dispositif d'entraînement pour le déplacement de l'élément d'essuyage et
le déplacement de l'élément d'essuyage (54) au moyen du dispositif d'entraînement globalement dans la direction longitudinale de la zone de distribution (36), afin d'essuyer et donc de nettoyer celle-ci lorsque la coucheuse se trouve dans le dispositif de nettoyage de coucheuse,
**caractérisé en ce que**
l'élément d'essuyage (54) est déplacé, après le nettoyage de la zone de distribution, vers une position abaissée, afin d'éviter une collision avec la coucheuse (30).

11. Procédé selon la revendication 10, le déplacement de l'élément d'essuyage ayant lieu sur une trajectoire fermée.
